(19) Europäisches Patentamt
European Patent Office
Office européen des brevets

(11) Publication number: **0 623 151 B1**

# (12) EUROPEAN PATENT SPECIFICATION

(45) Date of publication of patent specification: **08.11.95**

(51) Int. Cl.[6]: **C08G 59/68**, C08L 63/00

(21) Application number: **92925301.1**

(22) Date of filing: **20.11.92**

(86) International application number: **PCT/US92/09936**

(87) International publication number: **WO 93/15124 (05.08.93 93/19)**

## (54) PHOTOACTIVATABLE, THERMALLY CURABLE EPOXY COMPOSITIONS.

(30) Priority: **22.01.92 US 823756**

(43) Date of publication of application: **09.11.94 Bulletin 94/45**

(45) Publication of the grant of the patent: **08.11.95 Bulletin 95/45**

(84) Designated Contracting States: **CH DE ES FR GB IT LI**

(56) References cited:
**EP-A- 0 094 914**
**EP-A- 0 109 851**
**EP-A- 0 169 066**
**EP-A- 0 221 559**

(73) Proprietor: **MINNESOTA MINING AND MANUFACTURING COMPANY**
**3M Center,**
**P.O. Box 33427**
**St. Paul,**
**Minnesota 55133-3427 (US)**

(72) Inventor: **TARBUTTON, Kent, S.**
**Post Office Box 33427**
**Saint Paul, MN 55133-3427 (US)**
Inventor: **ROBINS, Janis**
**Post Office Box 33427**
**Saint Paul, MN 55133-3427 (US)**
Inventor: **PALAZZOTTO, Michael, C.**
**Post Office Box 33427**
**Saint Paul, MN 55133-3427 (US)**
Inventor: **WILLETT, Peggy, S.**
**Post Office Box 33427**
**Saint Paul, MN 55133-3427 (US)**

(74) Representative: **VOSSIUS & PARTNER**
**Siebertstrasse 4**
**D-81675 München (DE)**

**EP 0 623 151 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a one-part, photoactivatable, thermally curable epoxy composition. This invention also relates to an epoxy adhesive made from the inventive photoactivatable, thermally curable epoxy composition.

### BACKGROUND OF THE INVENTION

Epoxides, i.e., organic compounds having one or more terminal or pendant oxirane (epoxy) groups, have been widely used for many years in adhesive compositions. These compounds are commonly cured, or caused to harden, by the addition of a curing or hardening agent. Many epoxy compositions use curing agents that begin to react immediately, or after a short period of time, even at room temperature or lower. These two-part adhesive compositions require that the epoxide and the curing agent be stored separately and only mixed immediately before use. Various attempts have been made to prolong "pot life" prior to cure of curable epoxy compositions. This allows the epoxide and curing agent to be mixed and stored before use as a one-part adhesive that is curable upon heating. Generally, it has been found that any increase in pot-life of epoxy compositions results in a corresponding sacrifice of cure speed. Additionally, achieving complete reaction, i.e., where all the epoxide functional groups are consumed, may require longer cure times and/or higher cure temperatures. The preferred curing agents, Lewis acids, cannot be used where appreciable pot-life of the composition is desired. Because of the high affinity of the Lewis acid with the oxygen atom of the oxirane ring, almost immediate curing of the epoxy resin takes place. Modification of the Lewis acids utilized has been attempted in order to prolong the pot-life of epoxy resins. One method of accomplishing this result has been to complex the Lewis acid with a nucleophilic reagent such as an ether, an alcohol, amine, or the like. As with the above disclosed two-part epoxy adhesive compositions, however, such one-part compositions have also been found to sacrifice cure time and/or performance characteristics of the resulting cured resin.

Various items disclosing the preparation and/or use of curing agents for epoxy resins and/or other curable compositions are discussed below.

US-A-4,404,355 (Eldin et al.) discloses the use of copper complex co-catalyzed onium salts as photoinitiators for epoxy resins. Such a catalyst system will cause gelation within several minutes at 120 °C, yet allows good pot-life at 40 °C. Achieving extended pot-life over a period of several months, however, is not possible with such a catalyst system. Additionally, there is no disclosure that the resulting adhesive has good performance properties, such as high overlap shear strength, when bonded to oiled metal surfaces.

US-A-4,216,288 and 4,203,814 (both to Crivello) disclose the use of aromatic onium salt initiators in combination with reducing agents and peroxides, respectively, as non-photoinitiated catalyst systems for curing epoxy resins. While the capability for extended pot-life is shown, there is no utility demonstrated with regard to the use of the catalyst systems for compounding a structural adhesive.

US-A-4,812,488 (Koleske et al.) discloses the use of caprolactone-type polyols to modulate the physical properties of photopolymerizable compositions utilizing onium salts as photoinitiators. Curing occurs, however, almost immediately upon exposure of the composition to light, thereby offering no post-activation latency or workability of the resin.

US-A-4,857,562 (Wacker et al.) discloses the use of compounds with poly(alkylene oxide) moieties in order to extend the pot-life of ultraviolet (UV) light curable epoxy resins as coatings. There is no indication of extended shelf-life of the coatings on the order of days or weeks and the effect on the balance between reactivity and latency is not clearly shown.

US-A-4,920,182 (Manser et at.) discloses the use of a photoactivated bis-arene Fe complex that initiates copolymerization of epoxy- and carboxyl-terminated polyesters after exposure to light and subsequent heating. There is, however, no indication of the degree of either pot-life before, or latency, after, photoactivation as well as the speed of cure and its relation to pot-life and latency. Although the patent discloses some affinity of the resulting adhesive for aluminum substrates, there is no evidence that such an adhesive would function well for bonding to oiled metal substrates such as cold rolled and galvanized steel. Additionally, polyesters of the type cited in the patent are known to display poor hydrolytic stability and may not allow for acceptable environmental durability.

US-A-4,846,905 (Tarbutton et al.) describes the use of an acid/amine complex as a catalyst for copolymerizing epoxides and polyols. While excellent utility as a structural adhesive for bonding oily galvanized steel is shown, this particular catalyst system will sacrifice pot-life to achieve rapid cure at low to moderate temperatures.

What is needed in the industry is a one-part, photoactivatable epoxy resin composition which has an extended pot life before photoactivation as well as latency afterwards, yet will cure rapidly over a broad temperature range (50°-200°C). It should also possess good structural adhesive properties for metal-to-metal and other bonding, e.g., high peel, shear, and impact strengths with good environmental durability.

## SUMMARY OF THE INVENTION

It has now been discovered that an epoxy structural adhesive exhibiting the above-described desirable properties can be made utilizing certain photoactivatable organometallic complex salt catalysts in combination with certain reactive polyols. The use of certain reactive polyols effects chain extension and matrix ductility of the adhesive which maximizes toughness, thereby allowing for excellent bonded mechanical properties. It has also been discovered that the use of certain polyols can have a dramatic effect on post-photoactivation latency and speed of cure of epoxy resin. While such a system offers a high degree of prephotoactivation pot-life and excellent bonded mechanical properties of epoxy resin, there is an additional benefit of control over reactivity and post-photoactivation latency of epoxy resin through selection of the polyol(s).

In one embodiment, the present invention provides a one-part, photoactivatable, thermally curable epoxy composition comprising:

(a) a glycidyl ether epoxide having an epoxide functionality of greater than one and a molecular weight between about 150 and 10,000;

(b) a catalytically effective amount of one or more photoactive organometallic complex salts of the formula:

$$[(L^1)(L^2)M^p]^{+q}\ Y_n$$

wherein:

$M^p$ represents a metal selected from the group consisting of: Cr, Mo, W, Mn, Re, Fe, Co, Rn, Os, Rh, and Ir;

$L^1$ represents 1 or 2 ligands contributing pi-electrons that can be the same or different ligand selected from the group of: substituted and unsubstituted eta$^3$-allyl, eta$^5$-cyclopentadienyl, and eta$^7$-cycloheptatrienyl, and eta$^6$-aromatic compounds selected from eta$^6$-benzene and substituted eta$^6$-benzene compounds and compounds having 2 to 4 fused rings, each capable of contributing 3 to 8 pi-electrons to the valence shell of $M^p$;

$L^2$ represents none or 1 to 3 ligands contributing an even number of sigma-electrons that can be the same or different ligand selected from the group of: carbon monoxide, nitrosonium, and aryl- or alkyl-substituted phosphines, stibines, arsines, and phosphites with the proviso that the total electronic charge contributed to $M^p$ by $L^1$ and $L^2$ plus the ionic charge contributed to $M^p$ results in a net residual positive charge of q to the complex;

q is an integer having a value of 1 or 2, the residual charge of the complex cation;

Y is a halogen-containing complex anion selected from the group consisting of: $AsF_6^-$, $SbF_6^-$, $SbF_5OH^-$, $CF_3SO_3^-$, $BF_4^-$, and $PF_6^-$; and

n is an integer having a value of 1 or 2, the number of complex anions required to neutralize the charge q on the complex cation;

(c) an aliphatic polyol, cycloaliphatic polyol, alkanol-substituted arene polyol, or mixtures thereof having about 2 to 18 carbon atoms, at least two hydroxy groups of which are primary or secondary, and being free of electron-withdrawing substituents, amine substituents, and large substituents that cause steric hindrance in the alpha position in relation to the carbon attached to a methylol group of the polyol; and

(d) a non-reactive toughening agent having an epoxide compatible component and an epoxide incompatible component insoluble in the epoxide.

In another embodiment, the present invention provides epoxy adhesives made by a process comprising the steps of:

(a) irradiating the foregoing disclosed one-part, photoactivatable, thermally curable epoxy composition with electromagnetic radiation; and

(b) sometime thereafter, heating the irradiated, thermally curable epoxy composition to a temperature sufficient to achieve curing of said epoxy composition to an adhesive state.

The resulting epoxy composition is useful not only as a structural adhesive for both metal and plastic bonding, but has utility in coatings, and in molded, cast, and potted products. As an adhesive, it can be rapidly cured at temperatures as low as 50°C and gives high shear, peel, and impact strength off oiled

galvanized and cold rolled steels as well as excellent retention of properties after environmental aging.

In the present invention, the terms "pot-life", "pot stability", or "shelf-life" mean the time taken for a composition to display a 50% decrease in the exothermic heat of reaction associated with the cure of the epoxy as measured by differential scanning calorimetry (DSC). This parameter has units of joules per gram of adhesive. The speed of cure is determined on a relative basis by noting at what temperature the exotherm associated with the cure of the epoxy reaches a maximum peak height measured in watts per gram. The terms "latent" or "latently curable" refer to the change in heat of reaction after photoactivation, again quantified by a 50% decrease in the exothermic heat of reaction. The term "% Conversion" refers to the amount of epoxide reacted or consumed during the cure process. This is determined from plots obtained via DSC.

Other aspects, benefits, and advantages of the present invention are apparent from the detailed description, examples, and claims.

## DETAILED DESCRIPTION OF THE INVENTION

The epoxide useful in the composition of the instant invention is a glycidyl ether epoxide having more than one oxirane ring polymerizable by ring opening, i.e., an epoxy functionality greater than one, preferably at least 2. These useful epoxides have a molecular weight between about 150 and 10,000, preferably, between about 300 and 1,000. Included are linear polymeric epoxides having terminal epoxy groups (e.g., a diglycidyl ether of a polyoxyalkylene glycol), polymeric epoxides having skeletal epoxy groups (e.g., polybutadiene polyepoxy), and polymeric epoxides having pendant epoxy groups (e.g., a glycidyl methacrylate polymer or copolymer). Mixtures of the foregoing epoxides are also useful in the composition of the instant invention. The useful epoxides are well-known and include such epoxides as the diglycidyl ethers of bisphenol A and of novolak resins, such as described in "Handbook of Epoxy Resins" by Lee and Nevill, McGraw-Hill book Co., New York (1967). Epoxides with flexibilized backbones are also useful.

Useful epoxides in the composition of the instant invention include compounds (having the required molecular weight) of the formula:

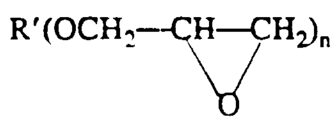

wherein:

R' is alkyl, alkyl ether, or aryl, preferably aryl, and n is an integer between 2 and 6. Preferred are aromatic glycidyl ethers, such as those prepared by reacting a polyhydric phenol with an excess of epichlorohydrin. Examples of useful polyhydric phenols include resorcinol, catechol, hydroquinone, and the polynuclear phenols including p,p'-dihydroxydibenzyl, p,p'-dihydroxydiphenyl, p,p'-dihydroxyphenyl sulfone, p,p'-dihydroxybenzophenone, 2,2'-dihydroxy-1,1-dinaphthylmethane, and the 2,2'; 2,3'; 2,4'; 3,3'; 3,4'; and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydioxydiphenylpropylphenylmethane, dihydroxydiphenylbutylphenylmethane, dihydroxydiphenyltolylethane, dihydroxydiphenyltolylmethylmethane, dihydroxydiphenyldicyclohexylmethane, dihydroxydiphenylcyclohexane, and polyhydric phenolic formaldehyde condensation products. Also preferred are polyglycidyl polyethers that contain as reactive groups only epoxy groups and hydroxy groups. Compounds of the above formula wherein n = 1 are useful as optional additives in the composition of the instant invention.

Examples of commercially available epoxides that are useful in the invention include diglycidyl ethers of bisphenol A (e.g., those available under the trademarks Epon 562, Epon 828, Epon 1001, and Epon 1310 from Shell Chemical Co., and DER-331, DER-332, and DER-334 available from Dow Chemical Co.), diglycidyl ethers of bisphenol F (e.g., Epiclon™ 830 available from Dainippon Ink and Chemicals, Inc.), silicone resins containing diglycidyl epoxy functionality, flame retardant epoxy resins (e.g., DER 580, a brominated bisphenol type epoxy resin available from Dow Chemical Co.), and 1,4-butanediol diglycidyl ethers (e.g., Kopoxite™ available from Koppers Company, Inc.). Preferably, the epoxide is the diglycidyl ether of bisphenol A or bisphenol F. Most preferably, the epoxide is the diglycidyl ether of bisphenol A.

The photoactive organometallic complex salt used in the present invention has the following formula:

$[(L^1)(L^2)M^p]^{+q} Y_n$

wherein:

$M^p$ represents a metal selected from the group consisting of: Cr, Mo, W, Mn, Re, Fe, Co, Rn, Os, Rh, and Ir; and preferably is selected from the group consisting of: Co, Mo, W, Mn, Re, Fe, and Cr.

$L^1$ represents 1 or 2 ligands contributing pi-electrons that can be the same or different ligand selected from: substituted and unsubstituted eta$^3$-allyl, eta$^5$-cyclopentadienyl, and eta$^7$-cycloheptatrienyl and eta$^6$-aromatic compounds selected from: eta$^6$-benzene and substituted eta$^6$-benzene compounds and compounds having 2 to 4 fused rings each capable of contributing 3 to 8 pi-electrons to the valence shell of $M^p$;

$L^2$ represents none or 1 to 3 ligands contributing an even number of sigma-electrons that can be the same or different ligand selected from: carbon monoxide, nitrosonium, and substituted alkyl- or aryl-substituted stibines, arsines, phosphines, and phosphites (such as triphenylphosphine, triphenylarsine, trimethylphosphite, triethylphosphine, etc.) with the proviso that the total electronic charge contributed to $M^p$ by $L^1$ and $L^2$ plus the ionic charge on metal $M^p$ results in a net residual positive charge of q to the complex;

q is an integer having a value of 1 or 2, the residual electrical charge of the complex cation;

Y is a halogen-containing complex anion selected from the group consisting of: $AsF_6^-$, $SbF_6^-$, $SbF_5OH^-$, $CF_3SO_3^-$, $BF_4^-$, and $PF_6^-$; and preferably selected from the group consisting of: $AsF_6^-$, $SbF_6^-$, $SbF_5OH^-$, and $CF_3SO_3^-$; and

n is an integer having a value of 1 or 2, the number of complex anions required to neutralize the charge q on the complex cation.

The foregoing disclosed organometallic complex salts can be prepared by one skilled in the art according to well-known procedures of synthetic organic chemistry. Additionally, such organometallic complex salts and methods of preparation thereof are disclosed in US-A-4,985,340 (Palazzotto et al.) and 5,059,701 (Keipert); and EP-A-94,914, 94,915, and 109,851.

In general, a catalytically effective amount of organometallic complex salt is utilized in the present invention, i.e., the quantity needed to effect curing of the epoxide to at least a degree to increase the viscosity of the composition. The amount of organometallic catalyst can range from about 0.1 to about 10 weight percent based upon the weight of the epoxide used, preferably about 0.25 to 5 weight percent, and most preferably about 0.5 to 2.0 weight percent.

The foregoing organometallic complex salt catalyst is activated by exposure to electromagnetic radiation including electron beam and gamma radiation and sources emitting active radiation having a wavelength preferably in the range of about 200-800 nm, and most preferably in the range of about 400-600 nm. Many different light sources are suitable for activating the catalyst such as tungsten lamps, halogen lamps, low to high pressure mercury and mercury vapor lamps, fluorescent lamps, sunlight, and lasers.

The polyols useful in the present invention are aliphatic, cycloaliphatic, or alkanol-substituted arene polyols, or mixtures thereof having 2 to 18 carbon atoms and at least two hydroxy groups, preferably at least three hydroxy groups, with at least one hydroxy group, preferably at least two hydroxy groups, being primary. As used herein, the term "alkanol-substituted arene polyol" refers to arene structures which are substituted with at least two alkanol groups, typically methanol. Additionally, the term "arene" as utilized herein refers to hydrocarbons containing at least one aromatic ring, e.g. benzene, biphenyl, etc. It should be noted that phenols are expressly excluded from the types of polyols which can be utilized in the present invention due to their acidic nature which can cause electrophilic protonic attack at the oxygen atom of the oxirane ring, thereby resulting in a prematurely desired opening of the oxirane ring. The polyol is free of amine groups, electron-withdrawing substituents such as strong acids, and large groups that cause steric hindrance in the alpha-position in relation to the carbon attached to the methylol group of the polyol. The polyol aids in chain lengthening and preventing over crosslinking of the epoxide during curing.

Examples of useful polyols include, but are not limited to, alkylene glycols, such as 1,2-ethanediol, 1,3-propanediol, 1,4-butanediol, and 2-ethyl-1,6-hexanediol; polyhydroxyalkanes, such as glycerine, trimethylolethane, pentaerythritol, 1,3-butanediol, 2-ethyl-1,3-pentanediol, and 2,2-oxydiethanol, sorbitol, 1,4-cyclohexane dimethanol, 1,4-benzene dimethanol, and polyalkoxylated bis-phenol A derivatives. Other examples of useful polyols are disclosed in the heretofore mentioned US-A-4,503,211. Examples of preferred polyols include 1,6-hexanediol, 1,4-cyclohexanedimethanol, trimethylolethane, trimethylolpropane, trimethylolaminoethane, ethylene glycol, diethylene glycol, 2-butene-1,4-diol, pentaerythritol, dipentaerythritol, tripentaerythritol, and blends thereof. The polyol is preferably present in an amount sufficient to provide a hydroxy to epoxy ratio in the composition between about 0.1:1 and 1.5:1, more preferably between about 0.25:1 and 1:1, and most preferably between about 0.5:1 and 0.9:1.

The polymeric toughening agents of the present invention have an epoxide incompatible component and an epoxide compatible component and do not react with the epoxide during curing.

The toughening agents which are useful in the present invention are polymeric compounds having both a rubbery phase and thermoplastic phase such as: graft polymers having a polymerized, diene rubbery core and a polyacrylate, polymethacrylate shell; graft polymers having a rubbery core with a polyacrylate or polymethacrylate shell; and elastomeric particles polymerized in situ in the epoxide from free-radical polymerizable monomers and a copolymerizable polymeric stabilizer.

Examples of useful epoxide incompatible toughening agents include, but are not limited to, graft copolymers having a polymerized diene rubbery backbone or core to which is grafted a shell of an acrylic acid ester or methacrylic acid ester, monovinyl aromatic hydrocarbon, or a mixture thereof, such as disclosed in US-A-3,496.250. Preferable rubbery backbones comprise polymerized butadiene or a polymerized mixture of butadiene and styrene. Preferable shells comprising polymerized methacrylic acid esters are lower alkyl ($C_1$-$C_4$) substituted methacrylates. Preferable monovinyl aromatic hydrocarbons are styrene, alpha-methylstyrene, vinyltoluene, vinylxylene, ethylvinylbenzene, isopropylstyrene, chlorostyrene, dichlorostyrene, and ethylchlorostyrene. It is important that the graft copolymer contain no functional groups, such as nitriles, that would poison the catalyst.

Examples of useful epoxide compatible toughening agents include, but are not limited to, acrylate core-shell graft copolymers wherein the core or backbone is a polyacrylate polymer having a glass transition temperature ($T_g$) below about 0 °C, such as polybutyl acrylate or polyisooctyl acrylate to which is grafted a polymethacrylate polymer (shell) having a $T_g$ above about 25 °C, such as polymethylmethacrylate.

A third class of toughening agents useful in the invention comprises elastomeric particles that have a $T_g$ below about 25 °C and have been polymerized in situ in the epoxide before mixing with the other components of the composition. These elastomeric particles are polymerized from free-radical polymerizable monomers and a copolymerizable polymeric stabilizer that is soluble in the epoxide. The free-radical polymerizable monomers are ethylenically-unsaturated monomers or diisocyanates combined with co-reactive difunctional hydrogen compounds such as diols, diamines, and alkanolamines. Examples of these elastomeric particles are disclosed in US-A-4,525,181. These particles are commonly referred to as "organosols."

The toughening agent is preferably useful in an amount equal to about 3-35%, most preferably about 5-15%, based on the weight of the epoxide. The toughening agents of the instant invention add strength to the composition after curing without reacting with the epoxide or interfering with curing.

Optionally, oxidizing agents can be added to the photoactivatable compositions of the present invention to further lower the peek exotherm temperature, and thereby lower the temperature needed to cure the photoactivated composition. Oxidizing agents include organic peroxides. A preferred class of peroxides includes peroxyketals such as 1,1-di-(t-butylperoxy)-3,3,5-trimethylcyclohexane; n-butyl-4-di-(t-butylperoxy)-valerate; 1,1-di-(t-amylperoxy)cyclohexane; 1,1-di-(t-butylperoxy)cyclohexane 2,2-di-(t-butylperoxy)butane; ethyl-3,3-di-(t-butylperoxy)butyrate;2,2-di-(t-amylperoxy)propane; and blends thereof. Preferably, oxidizing agents may be used in an amount in the the range of about 0.01 to about 10 percent by weight, based on the weight of epoxide, and more preferably, in the range of about 0.1 to about 5 percent.

The compositions of the invention can further include coupling agents such as 3-glycidoxypropyltrimethoxysilane.

Various adjuvants can also be added to the composition of the instant invention to improve the characteristics of the composition after curing. Included among useful adjuvants are cationically polymerizable ethylenically unsaturated monomers having up to 12 carbon atoms, e.g., aliphatic olefins such as butadiene, cycloolefins such as dipentene (limonene), and aromatic olefins such as styrene; plasticizers such as conventional phosphates and phthalates; thixotropic agents, such as fumed silica; pigments to enhance color tones, such as ferric oxide, brick dust, carbon black, and titanium dioxide; fillers, such as talcs, silica, magnesium, and calcium sulfate, beryllium aluminum silicate; clays such as bentonite; glass and ceramic beads and bubbles; microwave interactive particles such as mica particles that are aluminum vapor coated; and reinforcing materials, such as woven and nonwoven webs of organic and inorganic fibers, such as polyester, polyimide, glass fibers and ceramic fibers. These can be added in an amount effective for the intended purpose; typically, amounts up to about 50 parts of adjuvant per total weight of formulation can be used.

Means for curing the photoactivated epoxy composition of the present invention include, but are not limited to, conventional ovens, induction heating, infra-red radiation, microwave radiation, and immersion into liquid baths. The curing of the epoxy composition is conducted at a temperature in the range of about 50° to 200 °C for about 1 second to 2.0 hours and preferably at a temperature in the range of about 75 °C to about 175 °C for about 0.1 to about 1 hour. The curing time will depend upon the particular process used for curing. Induction heating cycles typically entail a cure time in the range of 5-60 seconds, whereas oven curing typically involves a cure time of about 0.1 to 2 hours.

The resulting epoxy-based adhesive of the present invention is particularly useful for metal-to-metal, plastic-to-plastic, or plastic-to-metal bonding. Metal surfaces include, but are not limited to, steel, titanium, aluminum, and magnesium with steel preferred. Plastic surfaces include, but are not limited to, polyethylene, polycarbonate, polyesters, polyurethanes, and urea-formaldehyde.

Examples of articles of manufacture which can include metal-to-metal, plastic-to-plastic, or plastic-to-metal bonded structures utilizing the inventive epoxy-based adhesive include, but are not limited to, automobiles, aircraft, refrigeration units, and doors.

**<u>TEST PROCEDURES</u>**

ADHESIVE PHOTOLYSIS

The adhesive mixture is spread to a thickness of about 0.5 mm on a sheet of 0.1 mm thick poly-(ethylene terephthalate) film. The adhesive coated sheet is then placed in a chamber and flushed with nitrogen to remove excess moisture from the air. It is preferred to limit moisture pick-up by the adhesive to no more than about 1% by weight of the adhesive and more preferably, less than about 0.5%. The adhesive in the chamber is then exposed for 4 minutes to a Super Diazo Blue type fluorescent lamp that has a major portion of the spectral emission at 440 nm. The surface of the adhesive is spaced at a distance of about 5 cm from the lamp and the power density was measured to be 12.1 mW/square cm at the adhesive surface as measured with a tunable detector (Lexel Powermeter, Model 504 from Lexel Corp.) set at 440 nm. After exposure to light, the photoactivated adhesive mixture is scraped off of the film for further use.

T-PEEL ADHESION TEST

Two strips of steel, which meet ASTM A619/A619M-82, measuring 25.4 mm by 203 mm by 0.8 mm are degreased with acetone. One surface of each strip is then brushed with ARMA 524 brand automotive draw oil, available from Mobil Oil Corporation. After 10 minutes, the excess oil is removed by wiping twice with clean cheesecloth. Adhesive is applied to the oiled surfaces of both steel strips and 5 stainless steel spacer wires measuring 0.15 mm in diameter and 25.4 mm in length are placed in the adhesive of one of the strips 25.4 mm apart with the wires running across the width of the strip. The other strip is then placed over the first with the adhesive coated surfaces facing each other. The strips are clamped together and placed in a forced air oven at 170 °C for 30 minutes until the adhesive is cured. The laminated strips are then left at about 22 °C for at least two hours. The peel strength is measured using a tensile tester according to ASTM 1876-72 with the strips being pulled apart at a crosshead speed of 50 cm per minute. The T-Peel is measured in Newtons/centimeter and the mode of failure is noted as adhesive (A) wherein the adhesive pulls away from the steel strip, cohesive (C) wherein the adhesive splits leaving adhesive on each of the strips, or mixed (M) wherein both modes of failure are observed.

LAP SHEAR

Sheets of 0.76 mm thick G60 hot-dipped extra smooth galvanized steel, obtained from National Steel Corporation, Livonia, MI, were cut into 25.4 mm by 76.2 mm test coupons and degreased with acetone. A drop of draw oil (FB27MC-1 obtained from Pillsbury Chemical Corp.) is placed on the surface of one coupon and the bonding surface of a second coupon is wiped against the first coupon to uniformly distribute the oil on the bonding surfaces. Both coupons are allowed to dry for at least two hours at about 22 °C. The photoactivated adhesive is spread over one end of the first oiled coupon. Two 25.5 mm lengths of 0.5 mm diameter stainless steel wires are placed in the adhesive parallel to the 76.2 mm axis of the coupon and about 8 mm apart. The oiled surface of the other coupon is placed over the adhesive such that there is a 12.7 mm overlap of the coupons and with the uncoated ends of the coupons aligned in opposite directions from each other. The coupons are clamped together and cured at 170 °C for 30 minutes unless indicated otherwise. The prepared samples are cooled for at least two hours at about 22 °C before testing. The lap shear is determined using a tensile tester according to ASTM Test Method D1002-72 with a crosshead speed of 5 cm/min. The lap shear is reported in megaPascals (MPA). The failure mode is noted as described in the T-peel test.

REACTIVITY

The reactivity of the adhesive is determined by measuring the peek exotherm temperature and the heat of reaction. Both of these parameters are determined using a 8-14 mg sample in a DSC (differential scanning calorimeter, Model 9900 System Computer/Thermal Analyzer from DuPont Instruments) with a rise rate of 20 °C/min.

The peak exotherm temperature is the temperature at which the heat of reaction is at a maximum as the temperature rises at a constant rate.

The heat of reaction is the amount of energy in Joules/gram that is given off during complete curing of the adhesive.

The latency is a measure of the reactivity and thus, the pot life, of the adhesive and is calculated as a % loss of the heat of reaction before and after aging. The lower the % loss, the better the pot life.

AGING TESTS

Aging in Non-photoactivated State

The adhesive is measured for initial reactivity by photoactivating a portion of the adhesive after mixing and determining the peak exotherm temperature and the initial heat of reaction. The remaining unphotoactivated adhesive is then aged at 22 °C for three months, photoactivated, and tested for exotherm temperature and heat of reaction. The latency (% loss) is determined by dividing the difference between the initial heat of reaction and the heat of reaction after aging by the initial heat of reaction.

Room Temperature Aging after photoactivation

The adhesive is photoactivated and aged at 22 °C for 7 days in the photoactivated state. The peak exotherm temperature and the latency are determined as described above. Air is excluded during aging by filling a glass jar to the rim and capping the jar such that the adhesive has contact with the lid.

Elevated Temperature Aging After Photoactivation

The adhesive is photoactivated and aged at 32 °C for 48 hours. The peak exotherm temperature and the latency are determined as described above. Air is excluded during aging as previously described.

IDENTIFICATION OF COMPONENTS USED IN THE EXAMPLES

Epon 828 Epoxy resin - diglycidyl ether of Bisphenol A (DEBA) having an epoxy equivalent weight of about 190 and an average molecular weight of 350-400 and available from Shell Chemical Company.

Paraloid™ BTA IIIF brand copolymer - methyl methacrylate/butadiene/styrene copolymer available from Rohm & Haas Company.

"Reactive Diluent 68" - diglycidyl ether of neopentyl glycol having an epoxy equivalent weight of about 135 available from Rhone-Poulenc.

"GP-7I" silica - silicon dioxide having a particle size range from 20-30 micrometers available from Haribson Walker Corp.

"Cab-O-Sil™ TS-720" brand silica - fumed silica available from Cabot Corp.

"B37/2000" - glass bubbles available from Minnesota Mining & Manufacturing Company.

MULTIFUNCTIONAL ALCOHOLS USED IN EXAMPLES

| | |
|---|---|
| BD - | 1,4-butanediol |
| BDM - | 1,4-benzenedimethanol |
| BPA - | ethylene oxide chain extended Bis-phenol A with MW of 360 (Synfac 8024 from Milliken Chemical Corp.) |
| BPOL - | 2,2'-dihydroxybiphenyl |
| BT - | 1,2,4-butanetriol |
| CHD - | 1,4-cyclohexanediol |
| CHDM - | 1,4-cyclohexanedimethanol |
| cis-CHDM - | cis-1,2-cyclohexanedimethanol |

| | |
|---|---|
| DEG - | diethylene glycol |
| DDD - | 1,12-dodecanediol |
| DEPD - | 2,2-diethyl-1,3-propanediol |
| GLY - | glycerol |
| HXD - | 1,6-hexanediol |
| HPD - | 1,7-heptanediol |
| PCL - | polycaprolactone with MW of 530 (Tone 0201 from Union Carbide Corp.) |
| PD - | 1,5-pentanediol |
| PNGA - | poly(neopentyl glycol adipate) with MW of 600 (Lexorex 1140-90 from Inolex Corp.) |
| PTHF - | polytetrahydrofuran with MW of 250 (Poly THF 250 from BASF Corp.) |
| THX - | 1,2,6-trihydroxyhexane |
| TME - | trimethylolethane |
| TMP - | trimethylolpropane |

EXAMPLES 1-13

Adhesive compositions were prepared by mixing 47.4 parts of diglycidyl ether of bisphenol A (Epon 828), 7.1 parts of Paraloid™ BTA IIIF core shell copolymer, and 4.7 parts of "Reactive Diluent 68" with a moderate shear mixer at 115°C for 1 hour. The compositions, substantially free of gel particles, were cooled to about 100°C and 1.0 part of $CpXyFeSbF_6$ [(eta-6-xylene) (eta-5-cyclopentadieneyl-Fe-II-hexafluoroantimonate)] catalyst was added. The compositions were mixed for about 15 minutes or until the catalyst was completely dissolved. After cooling to about 22°C, various polyols, i.e., multi-functional alcohols, as shown in Table 1 were added. The mixtures were then photoactivated as described above and the peak exotherm temperatures, heats of reaction, and the latency were determined for various aging times and temperatures. The results are shown in Tables 1 and 2.

COMPARATIVE EXAMPLES C1-C3

Adhesive compositions C1-C3 were prepared as in Example 1 except that 12 parts of each of the carboxyl terminated polyesters numbers I, II, and IX, respectively (prepared as disclosed in Column 9 of U.S. Patent No. 4,920,182 to Manser et al.), were used instead of the polyols. The adhesives were photoactivated and tested for aging at 22°C and results are shown in Table 2.

COMPARATIVE EXAMPLES C4-C6

Adhesive compositions C4-C6 were prepared using the carboxyl terminated polyesters numbers I, II, and IX, respectively, from Column 9 of U.S. Patent No. 4,920,182 and the epoxy resin components described therein. The compositions contained 15.0 parts of liquid epoxy resin, 10.0 parts solid epoxy resin, 12.0 parts polyester resin, 0.5 parts $CpXyFeSbF_6$ catalyst, 11.3 parts fused silicon dioxide, 4.0 parts B37/2000 glass bubbles, and 1.5 parts fumed silica thixotrope. The adhesives were photoactivated and tested for aging. Test results are shown in Table 2.

| Table 1 - Aging With No Photoactivation | | | | | | | | |
|---|---|---|---|---|---|---|---|---|
| Ex | Alcohol | Parts of alco-hol | OH/ Epoxy Ratio | Initial Reactivity | | Reactivity after 3 Mo. aging at 22 C | | Latency % loss |
| | | | | Peak Exotherm Temp (°C) | Heat of Reaction (J/gm) | Peak Exotherm Temp (°C) | Heat of Reaction (J/gm) | |
| 1 | 50/50 CHDM/HXD | 14.9 | 0.8 | 118 | 267 | --- | --- | ---* |
| 2 | PTHF | 16.3 | 0.46 | 133 | 361 | 131 | 330 | 9 |
| 3 | PCL | 18.6 | 0.25 | 142 | 307 | 141 | 366 | 0 |
| 4 | DEG | 6.8 | 0.46 | 158 | 390 | 159 | 389 | 0 |
| 5 | CHDM | 16.1 | 0.8 | 130 | 373 | 129 | 338 | 9 |
| 6 | BD | 10.1 | 0.7 | 141 | 383 | 141 | 370 | 3 |
| 7 | HXD | 13.2 | 0.7 | 121 | 365 | 122 | 346 | 5 |
| 8 | BDM | 17.9 | 0.9 | 133 | 362 | 135 | 320 | 12 |
| 9 | TMP | 11.7 | 0.9 | 171 | 350 | 172 | 366 | 0 |
| 10 | BT | 9.1 | 0.9 | 171/230 | 377 | 183/230 | 370 | 2 |
| 11 | GLY | 8.0 | 0.9 | 180 | 434 | 183 | 337 | 22 |
| 12 | TME | 9.1 | 0.8 | 177 | 377 | 175 | 371 | 2 |
| 13 | THX | 10.1 | 0.7 | 173 | 368 | 163 | 393 | 0 |

*A noticeable increase in viscosity was not seen with this example. An increase in viscosity indicates a loss o reactivity. The % loss is estimated to be about 10%.

Table 1 shows that the embodiments of the present invention exhibit little or no loss of pot life or reactivity after 3 months of aging at 22 °C before photoactivation.

Table 2 - Aging After Photoactivation

| Ex | Initial Reactivity | | Reactivity after Aging at 22°C for 7 Days | | | Reactivity after Aging at 32°C for 48 Hours | | |
|---|---|---|---|---|---|---|---|---|
| | Peak Exotherm Temp (°C) | Heat of Reaction J/gm | Peak Exotherm Temp (°C) | Heat of Reaction (J/gm) | Latency % Loss | Peak Exotherm Temp (°C) | Heat of Reaction (J/gm) | Latency % Loss |
| 1 | 118 | 267 | 121 | 241 | 11 | 122 | 200 | 25 |
| 2 | 133 | 361 | Cured | --- | 100 | 125 | 244 | 32 |
| 3 | 142 | 307 | Cured | --- | 100 | 122 | 193 | 32 |
| 4 | 158 | 390 | 130 | 342 | 12 | 132 | 387 | 1 |
| 5 | 130 | 373 | Cured | --- | 100 | 118 | 143 | 62 |
| 6 | 141 | 383 | 127 | 344 | 10 | 131 | 312 | 19 |
| 7 | 121 | 365 | Cured | --- | 100 | 121 | 289 | 21 |
| 8 | 133 | 362 | Cured | --- | 100 | 119 | 219 | 40 |
| 9 | 171 | 350 | 159 | 331 | 5 | 166 | 367 | 0 |
| 10 | 171/230 | 377 | 159 | 374 | 1 | 158 | 369 | 2 |
| 11 | 180 | 434 | 188 | 343 | 20 | 184 | 361 | 17 |
| 12 | 177 | 377 | 159 | 313 | 17 | 164 | 346 | 8 |
| 13 | 173 | 368 | 160 | 383 | 0 | 162 | 386 | 0 |
| C1 | 103 | 186 | Cured** | --- | 100 | --- | --- | --- |

| | | | | | | | | |
|---|---|---|---|---|---|---|---|---|
| C2 | 108 | 198 | Cured** | --- | 100 | --- | --- | --- |
| C3 | 114 | 192 | Cured** | --- | 100 | --- | --- | --- |
| C4 | 98 | 161 | Cured** | --- | 100 | --- | --- | --- |
| C5 | 99 | 162 | Cured** | --- | 100 | --- | --- | --- |
| C6 | 100 | 156 | Cured** | --- | 100 | --- | --- | --- |

**All of the Comparative Examples C1-C6 were cured after 24 hours.

The results in Table 2 show that the various multifunctional alcohols can be used to make adhesives of the present invention having varying degrees of latency after photoactivation. The adhesives of the present invention show excellent to fair latency as compared to prior art adhesives using carboxylic acid terminated polyesters instead of multifunctional alcohols.

EXAMPLES 14-34

Adhesive composition premixes were prepared by mixing 47.4 parts of diglycidyl ether of bisphenol A (Epon 828), 7.1 parts of Paraloid™ BTA IIIF core shell copolymer, and 4.7 parts of "Reactive Diluent 68" with a moderate shear mixer at 115°C for 1 hour. The premixes, substantially free of gel particles, were cooled to about 100°C and 1.0 part of $CpXyFeSbF_6$ catalyst was added. The premixes were mixed for about 15 minutes or until the catalyst was completely dissolved. After cooling to about 22°C, 22.5 parts of "GP-7I" silica, 4.5 parts "B37/2000" glass bubbles, 1.9 parts of "TS-720" fumed silica, and various polyols as shown in Table 3 were added to premixes. The adhesive compositions were mixed until the fillers were uniformly dispersed. The adhesive was then photoactivated, and samples were prepared and tested for T-Peel and lap shear according to the procedures described above. Test results are shown in Table 3.

EXAMPLES 35-52, COMPARATIVE EXAMPLE C7

Adhesive compositions were prepared as described in Example 14 except that varying alcohol/epoxy ratios as shown in Table 4 were used.

Table 3 - Adhesive Performance With Various Polyols

| Ex | Alcohol | Parts of alcohol | OH/Epoxy Ratio | Lap Shear Test | | T-Peel Test | |
|---|---|---|---|---|---|---|---|
| | | | | (MPa) | Failure Mode | (N/cm) | Failure Mode |
| 14 | 50/50 CHDM/HXD | 14.9 | 0.8 | 14.6 | A | 59.5 | C |
| 15 | PTHF | 16.4 | 0.46 | 14.2 | C | 63.0 | C |
| 16 | PCL | 18.9 | 0.25 | 13.6 | A | 47.6 | M |
| 17 | DEG | 6.8 | 0.46 | 15.0 | C | --- | --- |
| 18 | cis-CHDM | 16.4 | 0.8 | 16.6 | C | 54.3 | C |
| 19 | BPOL | 21.2 | 0.8 | 12.2 | C | 29.8 | A |
| 20 | DDD | 23.0 | 0.8 | 15.2 | C | 70.0 | C |
| 21 | BDM | 17.9 | 0.9 | 16.4 | C | --- | --- |
| 22 | TMP | 11.5 | 0.9 | 12.6 | A | 17 | M |
| 23 | BT | 9.1 | 0.9 | 5.7 | A | 0 | --- |
| 24 | GLY | 8.0 | 0.9 | 8.8 | C | 0 | --- |
| 25 | TME | 9.1 | 0.8 | 13.4 | A | --- | --- |
| 26 | THX | 10.1 | 0.7 | 13.9 | C | 8.8 | C |
| 27 | HPD | 15.0 | 0.8 | 17.2 | C | 75.3 | C |
| 28 | PD | 11.9 | 0.8 | 16.6 | C | 66.5 | C |
| 29 | CHD | 13.2 | 0.8 | 15.8 | C | 43.8 | C |
| 30 | DEPD | 15.0 | 0.8 | 16.0 | C | 47.3 | C |
| 31 | PNGA | 21.4 | 0.25 | 13.2 | C | 29.8 | C |
| 32 | BPA | 23.6 | 0.46 | 14.4 | C | 49.0 | M |

| | | | | | | | |
|---|---|---|---|---|---|---|---|
| 33 | 50/50 BD/HXD | 11.8 | 0.8 | 14.8 | C | 59.5 | C |
| 34 | 50/50 BD/PD | 13.8 | 0.8 | 15.0 | C | 66. | C |
| C1 | I | | | 3.0 | A | --- | --- |
| C2 | II | | | 3.0 | A | --- | --- |
| C3 | IX | | | 4.1 | A | --- | --- |
| C4 | I | | | 3.8 | A | --- | --- |
| C5 | II | | | 5.9 | A | --- | --- |
| C6 | IX | | | 6.1 | A | --- | --- |

The data in Table 3 show that the adhesive compositions of the present invention made with multi-functional alcohols have fair to excellent structural adhesive properties as compared to similar adhesive compositions having carboxylic acid terminated polyesters.

Table 4

| | | | | Lap Shear Test | | T-Peel Test | |
|---|---|---|---|---|---|---|---|
| Ex. | Alcohol | OH/Epoxy Ratio | Alcohol Amount | (MPa) | Failure Mode | (N/cm) | Failure Mode |
| 35 | BD | 0.25 | 3.2 | 11.2 | A | 7.004 | A |
| 36 | BD | 0.5 | 6.4 | 15.0 | M | 42.0 | A |
| 37 | BD | 0.8 | 10.3 | 16.9 | C | 56.0 | C |
| 38 | BD | 0.9 | 11.5 | 16.7 | C | 66.5 | C |
| 39 | BD | 1.0 | 12.8 | 11.9 | C | 57.8 | C |
| 40 | BD | 1.5 | 19.2 | 1.33 | C | 54.3 | C |
| 41 | HXD | 0.5 | 8.4 | 14.8 | C | 54.3 | C |
| 42 | HXD | 0.7 | 11.8 | 16.4 | C | 52.5 | C |
| 43 | HXD | 0.9 | 15.1 | 16.3 | C | 56.0 | C |
| 44 | HXD | 1.0 | 16.8 | 15.5 | C | 36.8 | M |
| 45 | THX | 0.5 | 6.4 | 12.6 | A | 47.3 | C |
| 46 | THX | 0.7 | 9.0 | 15.5 | C | 31.5 | C |
| 47 | THX | 0.8 | 10.3 | 12.1 | C | 8.8 | C |
| 48 | CHDM | 0.25 | 5.1 | 10.3 | A | 0 | A |

| | | | | | | | |
|---|---|---|---|---|---|---|---|
| 49 | CHDM | 0.5 | 10.3 | 13.1 | A | 28.0 | A |
| 50 | CHDM | 0.7 | 14.4 | 15.2 | A | 52.5 | M |
| 51 | CHDM | 0.9 | 19.1 | 16.4 | M | 54.3 | C |
| 52 | CHDM | 1.0 | 20.5 | 13.6 | C | 26.3 | C |
| C7 | CHDM | 0 | 0 | 6.5 | A | 0 | A |

The results in Table 4 show that exceptional lap shear and T-peel performance can be obtained by selection of the polyol and the alcohol to epoxy ratio. The preferred embodiments of the invention exhibit superior properties as compared to Example C7 which has no polyol.

EXAMPLES 53-70

Adhesive compositions were prepared as in Example 1 except that blends of diols and triols are used as the alcohol at the equivalent weights (eqs.) as shown in Table 5.

TABLE 5

AGED AFTER PHOTOACTIVATION

| Example | Diol | | Triol | | OH/Epoxy | INITIAL | | AFTER 7 DAYS @ 22C | | |
|---|---|---|---|---|---|---|---|---|---|---|
| | HXD | | TMP | | | Exotherm Temp (°C) | Heat of Reaction (J/gm.) | Exotherm Temp (°C) | Heat of Reaction (J/gm.) | Latency (% Loss) |
| | Eqs. | Amount | Eqs. | Amount | | | | | | |
| 53 | 0.253 | 14.94 | - | - | 0.8 | 123 | 360 | 130 | 150 | 58 |
| 54 | 0.247 | 14.60 | 0.006 | 0.27 | 0.8 | 144 | 365 | 131 | 310 | 15 |
| 55 | 0.24 | 14.19 | 0.013 | 0.56 | 0.8 | 150 | 365 | 133 | 300 | 18 |
| 56 | 0.228 | 13.47 | 0.025 | 1.12 | 0.8 | 158 | 370 | 136 | 309 | 16 |
| 57 | 0.203 | 12.00 | 0.05 | 2.24 | 0.8 | 164 | 370 | 146 | 316 | 15 |
| 58 | - | - | 0.253 | 11.31 | 0.8 | 168 | 405 | 172 | 384 | 5 |
| | HPD | | GLY | | | | | | | |
| 59 | 0.253 | 16.33 | 0 | - | 0.8 | 128 | 356 | 123 | 258 | 28 |
| 60 | 0.247 | 15.86 | 0.006 | 0.18 | 0.8 | 130 | 359 | 128 | 287 | 18 |
| 61 | 0.24 | 15.07 | 0.013 | 0.4 | 0.8 | 133 | 355 | 131 | 309 | 14 |
| 62 | 0.228 | 15.86 | 0.025 | 0.77 | 0.8 | 136 | 351 | 135 | 325 | 7 |
| 63 | 0.203 | 16.33 | 0.05 | 1.54 | 0.8 | 138 | 355 | 141 | 329 | 7 |
| 64 | 0 | - | 0.253 | 7.77 | 0.8 | 177 | 380 | 189 | 379 | 1 |
| | PD | | Voranol 234-630 | | | | | | | |
| 65 | 0.253 | 13.68 | - | - | 0.8 | 125 | 359 | 129 | 319 | 11 |
| 66 | 0.247 | 12.84 | 0.006 | 0.54 | 0.8 | 133 | 381 | 129 | 344 | 10 |

| | | | | | | | | | | |
|---|---|---|---|---|---|---|---|---|---|---|
| 67 | 0.24 | 12.48 | 0.013 | 1.16 | 0.8 | 139 | 383 | 135 | 359 | 6 |
| 68 | 0.228 | 11.86 | 0.025 | 2.22 | 0.8 | 149 | 360 | 140 | 356 | 6 |
| 69 | 0.203 | 10.56 | 0.05 | 4.45 | 0.8 | 154 | 358 | 144 | 351 | 2 |
| 70 | - | - | 0.253 | 22.52 | 0.8 | 161 | 329 | 163 | 318 | 3 |

Voranol 234-630 = a triol available from the Dow Chemical Corp.

The results in Table 5 show by combining diols and triols, the latency and reactivity can be precisely controlled.

EXAMPLES 71-76

Examples 71-76 were prepared as described in Example 14 except that the polyol types and amounts used were those used in Examples 65-70, respectively.

Examples 71-76 were tested for lap shear with and without oil after curing at various times and temperatures. The percent conversion of the adhesive was determined from isothermal plots on a DSC. The data in Table 6 show that by varying the cure temperatures, cure times and amounts of diol and triol in a formulation, various performance characteristics can be achieved. It is also shown on the table that oil tends to reduce the lap shear strength. However, by choosing appropriate curing conditions and the proper polyols, lap shear strength on oily metal described in the test procedure can be increased.

TABLE 6

| Cure time (Minutes) | | | | 10 Minutes | | | 20 Minutes | | | 30 Minutes | | |
|---|---|---|---|---|---|---|---|---|---|---|---|---|
| Example | Formulation Reference | Cure Temp (°C) | Mole % Triol | % Conversion | Lap Shear MPA | | % Conversion | Lap Shear MPA | | % Conversion | Lap Shear MPA | |
| | | | | | With oil | No oil | | With oil | No oil | | With oil | No oil |
| 71 | 59 | 100 | 0 | 32 | 0 | 0 | 50 | 0 | 14.2 | 62 | 0 | 0 |
| 72 | 60 | 100 | 1.8 | 16 | 0 | 0 | 28 | 0 | 0 | 37 | 0 | 0 |
| 73 | 61 | 100 | 3.7 | 11 | 0 | 0 | 20 | 0 | 0 | 28 | 0 | 0 |
| 74 | 62 | 100 | 7.5 | 11 | 0 | 0 | 20 | 0 | 0 | 28 | 0 | 0 |
| 75 | 63 | 100 | 15 | 7 | 0 | 0 | 12 | 0 | 0 | 18 | 0 | 0 |
| 76 | 64 | 100 | 100 | 10 | 0 | 0 | 18 | 0 | 0 | 25 | 0 | 0 |
| 71 | 59 | 125 | 0 | 97 | 11.4 | 14.9 | 98 | 13.3 | 15.2 | 98 | 14.2 | 15.6 |
| 72 | 60 | 125 | 1.8 | 58 | 0.5 | 13.7 | 75 | 8.5 | 16.6 | 82 | 14.9 | 16.9 |
| 73 | 61 | 125 | 3.7 | 43 | 0 | 3.0 | 59 | 3.5 | 15.7 | 68 | 12.0 | 15.7 |
| 74 | 62 | 125 | 7.5 | 46 | 0 | 0 | 62 | 2.2 | 14.2 | 72 | 10.7 | 15.5 |
| 75 | 63 | 125 | 15 | 28 | 0 | 0 | 45 | 0 | 9.0 | 53 | 0.7 | 15.5 |
| 76 | 64 | 125 | 100 | 31 | 0 | 0 | 47 | 0 | 0 | 57 | 0 | 0 |
| 71 | 59 | 150 | 0 | 100 | 14.0 | 15.7 | 100 | 15.1 | 14.4 | 100 | 14.5 | 16.1 |
| 72 | 60 | 150 | 1.8 | 88 | 13.4 | 16.7 | 95 | 16.1 | 16.9 | 97 | 16.1 | 16.3 |
| 73 | 61 | 150 | 3.7 | 77 | 12.3 | 15.8 | 87 | 17.0 | 16.1 | 92 | 17.3 | 17.3 |
| 74 | 62 | 150 | 7.5 | 82 | 8.3 | 14.6 | 90 | 16.3 | 15.0 | 93 | 16.8 | 17.8 |

| | | | | | | | | | | | | |
|---|---|---|---|---|---|---|---|---|---|---|---|---|
| 75 | 63 | 150 | 15 | 63 | 1.1 | 14.2 | 77 | 13.9 | 16.1 | 83 | 16.9 | 17.3 |
| 76 | 64 | 150 | 100 | 60 | 0 | 0 | 75 | 0.7 | 11.4 | 82 | 3.4 | 15.0 |
| 71 | 59 | 170 | 0 | 100 | 14.5 | 16.9 | 100 | 14.8 | 16.9 | 100 | 15.4 | 17.4 |
| 72 | 60 | 170 | 1.8 | 96 | 15.3 | 17.5 | 97 | 16.2 | 17.7 | 99 | 17.6 | 18.2 |
| 73 | 61 | 170 | 3.7 | 91 | 15.2 | 17.3 | 93 | 15.6 | 17.6 | 96 | 18.0 | 16.8 |
| 74 | 62 | 170 | 7.5 | 92 | 14.2 | 17.3 | 93 | 15.8 | 17.7 | 96 | 18.2 | 18.4 |
| 75 | 63 | 170 | 15 | 83 | 15.6 | 16.7 | 91 | 16.0 | 17.4 | 96 | 18.0 | 16.8 |
| 76 | 64 | 170 | 100 | 77 | 3.2 | 1.1 | 87 | 12.8 | 16.0 | 92 | 18.2 | 17.7 |

Note: All failure modes cohesive

EXAMPLES 77-83

Adhesive compositions were prepared as described in Example 14 except that the polyol types and amounts were those used for the reference examples. The compositions were tested for lap shear after exposing to the conditions shown in Table 7.

Table 7

| Example | Reference Example | Lap Shear - Failure Mode/MPA | | | | | |
|---|---|---|---|---|---|---|---|
| | | Initial Shear | 14 days in 130°F water | 14 days in 200°F water | 3 days boiling water | 500 hours 100°F and 100% RH | 500 hours 5% salt spray |
| 77 | 14 | C / 15.5 | C / 15.5 | C / 14.4 | C / 13.5 | M / 16.3 | M / 14.3 |
| 78 | 15 | C / 16.1 | C / 2.2 | C / 1.9 | C / 1.9 | C / 7.7 | C / 0.6 |
| 79 | 16 | C / 13.0 | C / 0.5 | 0 | C / 0.6 | C / 6.3 | C / 1.7 |
| 80 | 32 | A / 16.9 | A / 14.9 | A / 12.6 | A / 13.7 | A / 15.9 | A / 14.3 |
| 81 | 5 | A / 16.1 | C / 14.5 | C / 12.9 | C / 12.6 | M / 14.5 | A / 13.4 |
| 82 | 6 | C / 16.4 | C / 7.5 | C / 6.2 | C / 6.0 | C / 8.1 | C / 10.1 |
| 83 | 7 | C / 14.6 | C / 5.0 | C / 5.3 | C / 4.3 | C / 6.3 | C / 6.5 |

The data in Table 7 show that the preferred embodiments maintain excellent lap shear properties afar exposing to the aging conditions shown in the table.

Examples 84-85

Adhesive compositions were prepared as in Example 14 except that for Example 84, 0.8 part of 1,1-di-(t-butylperoxy)3,3,5-trimethylcyclohexane(Lupersol™ 231 available from Atochem North America, Inc., Buffalo, NY) was added to 100 parts of the composition and for Example 85, 1 part of Triganox™ 29 (a peroxyketal available from Akzo Chemie) was added to 100 parts of the composition. Reactivity data are shown in Table 8.

Table 8

| Example | Reactivity with peroxide | |
|---|---|---|
| | Peak Exotherm Temp (°C) | Heat of Reaction (J/gm) |
| 14 | 119 | 270 |
| 84 | 85 | 206 |
| 85 | 81 | 201 |

The data in Table 8 show that the peak exotherm temperature can be lowered even further by including a peroxyketal.

Examples 86 and 87

Adhesive compositions were made as described in Example 14. For Example 86, 1 part of "Z-6040" (3-glycidoxypropyltrimethoxysilane, available from Dow Corning Co.) was added to 100 parts of the composition. For Example 87, 1 part of "Z-6040" and 0.5 part of Triganox™ 29 were added to 100 parts of the composition. Reactivity data for all three compositions are shown in Table 9.

Table 9

| Example | Reactivity | |
|---|---|---|
| | Peak Exotherm Temp (°C) | Heat of Reaction(J/gm) |
| 14 | 119 | 270 |
| 86 | 131/175 (bimodal) | 257 |
| 87 | 87 | 226 |

The data in Table 9 show that the peak exotherm temperature can be raised by adding a coupling agent and the use of a peroxyketal can lower the peak exotherm temperature while having a higher heat of reaction.

Examples 88-89

Adhesive compositions were prepared as described in Example 1 except that 1.6 parts of $CpXyFeSbF_6$ catalyst was used instead of 1 part. After cooling the compositions to about 22°C, 26.7 parts of "GP-7I" silica, 5.4 parts of "B37/2000" glass bubbles, 2.3 parts of "TS-720" fumed silica, and 28.8 parts of Voranol™ 240-446 (a polyol available from Dow Chemical Company) are added to the compositions. Example 88 contained no further additives. Example 89 included 0.3 parts of Lupersol™ 231 and Example 90 included 1.5 parts of Lupersol™ 231. The compositions were tested for reactivity and the test data are shown in Table 10.

Table 10

| Example | Reactivity | |
|---|---|---|
| | Peak Exotherm Temp (°C) | Heat of Reaction(J/gm) |
| 88 | 202 | 186 |
| 89 | 120 | 200 |
| 90 | 98 | 207 |

The data in Table 10 show that the addition of varying amounts of a peroxyketal can vary the peak exotherm temperatures so that the temperature at which the composition cures can be controlled.

Reasonable modifications and variations are possible from the foregoing disclosure without departing from either the spirit or scope of the present invention as defined in the claims.

**Claims**

**1.** A one-part, photoactivable, thermally curable epoxy composition comprising:

(a) a glycidyl ether epoxide having an epoxide functionality of greater than one and a molecular weight between 150 and 10,000;

(b) a catalytically effective amount of one or more photoactive organometallic complex salt of the formula:

$[(L^1)(L^2)M^p]^{+q}\ Y_n$

wherein:

$M^p$ represents a metal selected from the group consisting of: Cr, Mo, W, Mn, Re, Fe, Co, Rn, Os, Rh, and Ir.

$L^1$ represents 1 or 2 ligands contributing pi-electrons that can be the same or different ligand selected from the group of: substituted and unsubstituted $eta^3$-allyl, $eta^5$-cyclopentadienyl, and $eta^7$-cycloheptatrienyl, and $eta^6$-aromatic compounds selected from: $eta^6$-benzene and substituted $eta^6$-benzene compounds and compounds having 2 to 4 fused rings, each capable of contributing 3 to 8 pi-electrons to the valence shell of $M^p$;

$L^2$ represents none or 1 to 3 ligands contributing an even number of sigma-electrons that can be the same or different ligand selected from: carbon monoxide, nitrosonium, or alkyl- or aryl-substituted phosphines, stibines, arsines, and phosphites with the proviso that the total electronic charge contributed to $M^p$ by $L^1$ and $L^2$ plus the ionic charge contributed to $M^p$ results in a net residual positive charge of q to the complex;

q is an integer having a value of 1 or 2, the residual charge of the complex cation;

Y is a halogen-containing complex anion selected from the group consisting of: $AsF_6^-$; $SbF_6^-$, $SbF_5OH^-$, $CF_3SO_3^-$, $BF_4^-$, and $PF_6^-$; and

n is an integer having a value of 1 or 2, the number of complex anions required to neutralize the charge q on the complex cation;

(c) an aliphatic polyol, cycloaliphatic polyol or alkanol-substituted arene polyol, or mixtures thereof having 2 to 18 carbon atoms, at least two hydroxy groups of which are primary or secondary, and being free of electron-withdrawing substituents, amine substituents, and large substituents that cause steric hindrance in the alpha position in relation to the carbon attached to a methylol group of the polyol; and

(d) a non-reactive toughening agent having an epoxide compatible compound, an epoxide incompatible compound insoluble in the epoxide and optionally elastomeric particles having a $T_g$ below about 25°C.

**2.** The composition of Claim 1 wherein said epoxide has an epoxide functionality of greater than 2.

**3.** The composition of Claim 1 wherein said epoxide has the formula:

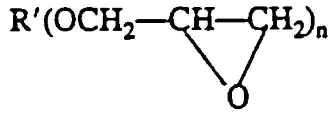

wherein:
R' is alkyl, alkyl ether, or aryl; and
n is an integer between 2 and 6.

**4.** The composition of Claim 1 wherein $M^p$ represents iron.

**5.** The composition of Claim 1 wherein Y represents $SbF_6^-$, $SbF_5OH^-$, or $CF_3SO_3^-$.

**6.** The composition of Claim 1 wherein said organometallic complex salt is present in said composition in an amount of from about 0.1-10 weight percent based upon the weight of said epoxide.

**7.** The composition of Claim 1 wherein said polyol is present in an amount sufficient to provide a hydroxy to epoxide ratio between 0.1:1 and 1.5:1.

**8.** The composition of Claim 7 wherein said polyol is present in an amount sufficient to provide a hydroxy to epoxide ratio between 0.25:1 to 1:1.

**9.** The composition of Claim 1 wherein said toughening agent is a polymeric compound having both a rubbery phase and a thermoplastic phase.

**10.** The composition of Claim 9 wherein said toughening agent is a graft polymer having a polymerized, diene rubbery core and a shell grafted thereto of an acrylic acid ester, a methacrylic acid ester, a monovinyl aromatic hydrocarbon, or a mixture thereof.

**11.** The composition of Claim 1 wherein said toughening agent is present at between 3% and 35% by weight of said epoxide.

**12.** The composition of Claim 11 wherein said toughening agent is present at between 5% and 15% by weight of said epoxide.

**13.** An epoxy-based adhesive made by the process comprising the steps of:
(a) irradiating the one-part, photoactivatable, thermally curable epoxy composition of Claim 1 with electromagnetic radiation; and
(b) sometime thereafter, heating the irradiated thermally curable epoxy composition to a temperature sufficient to achieve curing of said epoxy composition to an adhesive state.

**14.** The adhesive of Claim 13 wherein the wavelength of said electromagnetic radiation is in the range of 200 to 800 nm.

**15.** The adhesive of Claim 13 wherein said heating step in (b) is conducted at a temperature in the range of 50° to 200°C.

**16.** An article comprising metal-metal bonding whereby the adhesive of Claim 13 is utilized for the metal-to-metal bonding.

**17.** The article of Claim 16 wherein at least one of said metals is steel.

**18.** An article comprising plastic-to-metal bonding whereby the adhesive of Claim 13 is utilized for the plastic-to-metal bonding.

**19.** The article of Claim 18 wherein said metal is steel.

**20.** An article comprising plastic-to-plastic bonding whereby the adhesive of Claim 13 is utilized for the plastic-to-plastic bonding.

**21.** The composition of Claim 1 further comprising an oxidizing agent.

**22.** The composition of Claim 22 wherein said oxidizing agent is a peroxyketal.

**23.** The composition of Claim 1 further comprising a coupling agent.

**Patentansprüche**

**1.** Photoaktivierbare, hitzehärtbare Einkomponenten-Epoxyzusammensetzung, umfassend:

(a) ein Glycidyletherepoxid mit einer Epoxyfunktionalität größer 1 und einem Molekulargewicht zwischen 150 und 10.000;

(b) eine katalytisch wirksame Menge eines oder mehrerer photoaktiver organo-metallischer Komplexsalze der Formel:

$$[(L^1)(L^2)M^P]^{+q}\ Y_n$$

wobei:

$M^P$ ein Metall bedeutet, ausgewählt aus Cr, Mo, W, Mn, Re, Fe, Co, Rn, Os, Rh und Ir;

$L^1$ 1 oder 2 $\pi$-Elektron(en) beitragende Liganden bedeutet, wobei die Liganden, die gleich oder verschieden sein können ausgewählt sind aus substituierten und unsubstituierten $\epsilon^3$-Allyl-, $\epsilon^5$-Cyclopentadienyl und $\epsilon^7$-Cycloheptatrienyl-Verbindungen und $\epsilon^6$-aromatischen Verbindungen, ausgewählt aus $\epsilon^6$-Benzol- und substituierten $\epsilon^6$-Benzolverbindungen und Verbindungen mit 2 bis 4 anellierten Ringen, von denen jede zur Valenzschale von $M^P$ 3 bis 8 $\pi$-Elelctronen beitragen kann;

$L^2$ keinen oder 1 bis 3 Liganden bedeutet, der (die) eine gerade Anzahl $\sigma$-Elektronen beiträgt (beitragen), wobei die Liganden, die gleich oder verschieden sein können, ausgewählt sind aus Kohlenmonoxid, Nitrosoniumionen oder aryl- oder alkylsubstituierten Phosphinen, Stibinen, Arsinen und Phosphiten, mit der Maßgabe, daß der Beitrag der elektronischen Gesamtladung zu $M^P$ durch $L^1$ und $L^2$ plus der Beitrag der ionischen Ladung zu $M^P$ zu einer positiven Nettorestladung q des Komplexes führt; q eine ganze Zahl mit dem Wert 1 oder 2, die Restladung des Komplexkations, bedeutet;

Y ein Halogenatome enthaltendes Komplexanion bedeutet, ausgewählt aus $AsF_6^-$, $SbF_6^-$, $SbF_5OH^-$, $CF_3SO_3^-$, $BF_4^-$ und $PF_6^-$; und

n eine ganze Zahl mit dem Wert 1 oder 2, die Anzahl der zur Neutralisation der Ladung q des Komplexkations erforderlichen Komplexanionen, bedeutet;

(c) ein aliphatisches Polyol, ein cycloaliphatisches Polyol, ein alkanol-substituiertes Arenpolyol oder Gemische davon mit 2 bis 18 Kohlenstoffatomen, wobei mindestens 2 Hydroxygruppen davon primäre oder sekundäre Hydroxygruppen sind, und die frei sind von elektronenziehenden Substituenten, Amin-Substituenten und großen Substituenten, die eine sterische Behinderung in $\alpha$-Stellung zum an eine Methylolgruppe des Polyols gebundenen Kohlenstoffatom bewirken; und

(d) ein nichtreaktives Zähigkeit verleihendes Mittel mit einer epoxidverträglichen Verbindung und einer im Epoxid unlöslichen epoxidunverträglichen Verbindung und gegebenenfalls elastomere Teilchen mit einer $T_g$ unter etwa 25 °C.

**2.** Zusammensetzung nach Anspruch 1, wobei das Epoxid eine Epoxyfunktionalität von über 2 besitzt.

**3.** Zusammensetzung nach Anspruch 1, wobei das Epoxid die Formel

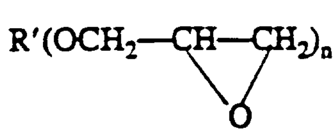

besitzt, wobei
R' einen Alkyl-, Alkylether- oder Arylrest bedeutet; und
n eine ganze Zahl zwischen 2 und 6 bedeutet.

**4.** Zusammensetzung nach Anspruch 1, wobei $M^P$ Eisen bedeutet.

**5.** Zusammensetzung nach Anspruch 1, wobei Y $SbF_6^-$, $SbF_5OH^-$ oder $CF_3SO_3^-$ bedeutet.

**6.** Zusammensetzung nach Anspruch 1, wobei das organometallische Komplexsalz in der Zusammensetzung in einer Menge von etwa 0,1-10 Gew.-%, bezogen auf das Gewicht des Epoxids, vorhanden ist.

**7.** Zusammensetzung nach Anspruch 1, wobei das Polyol in einer Menge vorhanden ist, die ausreicht, um ein Hydroxy/Epoxy-Verhältnis zwischen 0,1:1 und 1,5:1 zur Verfügung zu stellen.

**8.** Zusammensetzung nach Anspruch 7, wobei das Polyol in einer Menge vorhanden ist, die ausreicht, um ein Hydroxy/Epoxy-Verhältnis zwischen 0,25:1 und 1:1 zur Verfügung zu stellen.

**9.** Zusammensetzung nach Anspruch 1, wobei das Zähigkeit verleihende Mittel eine polymere Verbindung mit sowohl einer gummiartigen als auch einer thermoplastischen Phase ist.

**10.** Zusammensetzung nach Anspruch 9, wobei das Zähigkeit verleihende Mittel ein Pfropfpolymer mit einem polymerisierten gummiartigen Dienkern und einer darauf gepfropften Schale aus einem Acrylsäureester, einem Methacrylsäureester, einem aromatischen Monovinylkohlenwasserstoff oder einem Gemisch davon ist.

**11.** Zusammensetzung nach Anspruch 1, wobei das Zähigkeit verleihende Mittel in einer Menge zwischen 3 Gew.-% und 35 Gew.-% des Epoxids vorhanden ist.

**12.** Zusammensetzung nach Anspruch 11, wobei das Zähigkeit verleihende Mittel in einer Menge zwischen 5 Gew.-% und 15 Gew.-% des Epoxids vorhanden ist.

**13.** Klebstoff auf Epoxybasis, hergestellt durch das Verfahren, umfassend die Schritte:
(a) Bestrahlen der photoaktivierbaren, hitzehärtbaren Einkomponenten-Epoxyzusammensetzung aus Anspruch 1 mit elektromagnetischer Strahlung; und
(b) einige Zeit danach Erhitzen der bestrahlten, hitzehärtbaren Epoxyzusammensetzung auf eine Temperatur, die zum Härten der Epoxyzusammensetzung zu einem klebenden Zustand ausreicht.

**14.** Klebstoff nach Anspruch 13, wobei die Wellenlänge der elektromagnetischen Strahlung im Bereich von 200 bis 800 nm liegt.

**15.** Klebstoff nach Anspruch 13, wobei der Erhitzungsschritt in (b) bei einer Temperatur im Bereich von 50 °C bis 200 °C durchgeführt wird.

**16.** Artikel, umfassend eine Metall/Metall-Verklebung, wobei der Klebstoff aus Anspruch 13 für die Metall/Metall-Verklebung verwendet wird.

**17.** Artikel nach Anspruch 16, wobei mindestens eines der Metalle Stahl ist.

**18.** Artikel, umfassend eine Kunststoff/Metall-Verklebung, wobei der Klebstoff aus Anspruch 13 für die Kunststoff/Metall-Verklebung verwendet wird.

**19.** Artikel nach Anspruch 18, wobei das Metall Stahl ist.

**20.** Artikel, umfassend eine Kunststoff/Kunststoff-Verklebung, wobei der Klebstoff aus Anspruch 13 für die Kunststoff/Kunststoff-Verklebung verwendet wird.

**21.** Zusammensetzung nach Anspruch 1, ferner umfassend ein Oxidationsmittel.

**22.** Zusammensetzung nach Anspruch 22, wobei das Oxidationsmittel ein Peroxyketal ist.

**23.** Zusammensetzung nach Anspruch 1, ferner umfassend einen Kuppler.

## Revendications

**1.** Une composition époxy en une partie, à durcissement thermique et photosensibilisable, comprenant :

(a) un époxyde d'éther de glycidyle présentant une fonctionnalité époxyde supérieure à un et une masse moléculaire comprise entre environ 150 et 10 000 ;

(b) une quantité efficace d'un point de vue catalytique d'un ou de plusieurs sels de complexe organométallique photosensible de formule :

$[(L^1)(L^2)M^p]^{+q}\ Y_n$

où :

$M^p$ représente un métal sélectionné parmi le groupe composé de : Cr, Mo, W, Mn, Re, Fe, Co, Rn, Os, Rn et Ir ;

$L^1$ représente 1 ou 2 coordinats apportant des électrons pi, pouvant être des coordinats identiques ou différents sélectionnés parmi le groupe composé : d'êta$^3$-allyle, d'êta$^5$-cyclopentadiényle et d'êta$^7$-cycloheptatriényle substitués et non substitués, et de composés êta$^6$-aromatiques sélectionnés parmi de l'êta$^6$-benzène et des composés d'êta$^6$-benzène substitué, et des composés présentant 2 à 4 anneaux condensés, chacun étant capable d'apporter 3 à 8 électrons pi à l'enveloppe de valence de $M^p$ ;

$L^2$ représente aucun, ou 1 à 3 coordinats apportant un nombre pair d'électrons sigma et pouvant être des coordinats identiques ou différents sélectionnés parmi le groupe composé : de monoxyde de carbone, de nitrosonium, ou de phosphines, de stibines, d'arsines et de phosphites substitués par un aryle ou un alkyle, à condition que la charge électronique totale apportée à $M^p$ par $L^1$ et $L^2$ plus la charge ionique apportée à $M^p$ entraîne une charge positive résiduelle nette de q par rapport au complexe ;

q est un entier dont la valeur est égale à 1 ou 2, la charge résiduelle du cation complexe ;

Y est un anion complexe contenant un halogène, sélectionné parmi le groupe composé de : $AsF_6^-$; $SbF_6^-$, $SbF_5OH^-$, $CF_3SO_3^-$, $BF_4^-$, et $PF_6^-$; et

n est un entier présentant une valeur égale à 1 ou 2, le nombre d'anions complexes nécessaires pour neutraliser la charge q sur le cation complexe ;

(c) un polyol aliphatique, un polyol cycloaliphatique, un arènepolyol substitué par un alcanol, ou des mélanges de ceux-ci présentant environ 2 à 18 atomes de carbone, dont au moins deux groupes hydroxy sont primaires ou secondaires, et étant exempt de groupes substituants à enlèvement d'électron, de groupes substituants amine et de grands groupes substituants qui entraînent un empêchement stérique dans la position alpha par rapport au carbone attaché à un groupe méthylol du polyol ; et

(d) un agent de durcissement non réactif présentant un composant compatible avec l'époxyde et un composant incompatible avec l'époxyde et insoluble dans l'époxyde, et optionnellement des particules élastomères présentant une $T_g$ inférieure à environ 25 °C.

**2.** La composition selon la Revendication 1, dans laquelle ledit époxyde présente une fonctionnalité époxyde supérieure à 2.

**3.** La composition selon la Revendication 1, dans laquelle ledit époxyde présente la formule :

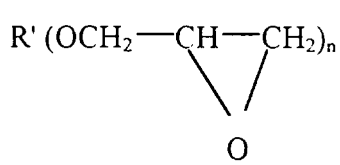

où :

R' est un alkyle, un alkyléther ou un aryle, et

n est un entier compris entre 2 et 6.

4. La composition selon la Revendication 1, dans laquelle $M^p$ représente du fer.

5. La composition selon la Revendication 1, dans laquelle Y représente $SbF_6^-$, $SbF_5OH^-$, ou $CF_3SO_3^-$.

6. La composition selon la Revendication 1, dans laquelle ledit sel de complexe organométallique est présent dans ladite composition dans une quantité comprise entre environ 0,1 et 10 pour-cent en masse sur la base de la masse dudit époxyde.

7. La composition selon la Revendication 1, dans laquelle ledit polyol est présent dans une quantité suffisante pour fournir un rapport entre hydroxy et époxyde compris entre 0,1:1 et 1,5:1.

8. La composition selon la Revendication 7, dans laquelle ledit polyol est présent dans une quantité suffisante pour fournir un rapport entre hydroxy et époxyde compris entre 0,25:1 et 1:1.

9. La composition selon la Revendication 1, dans laquelle ledit agent de durcissement est un composé polymère présentant une phase caoutchouteuse et une phase thermoplastique.

10. La composition selon la Revendication 9, dans laquelle ledit agent de durcissement est un polymère greffé présentant un noyau caoutchouteux de diène polymérisé et, greffée dessus, une enveloppe d'un ester d'acide acrylique, d'un ester d'acide méthacrylique, d'un hydrocarbure aromatique de monovinyle ou d'un mélange de ceux-ci.

11. La composition selon la Revendication 1, dans laquelle ledit agent de durcissement est présent dans une quantité comprise entre 3 % et 35 % en masse dudit époxyde.

12. La composition selon la Revendication 11, dans laquelle ledit agent de durcissement est présent dans une quantité comprise entre 5 % et 15 % en masse dudit époxyde.

13. Un adhésif à base d'époxy réalisé par le procédé comprenant les étapes consistant à :
(a) irradier la composition époxy en une partie, à durcissement thermique et photosensibilisable en accord avec la Revendication 1 au moyen d'un rayonnement électromagnétique ; et
(b) quelque temps après, chauffer la composition époxy à durcissement thermique irradiée à une température suffisante pour atteindre le durcissement de ladite composition époxy en un état d'adhésif.

14. L'adhésif de la Revendication 13, dans lequel la longueur d'onde dudit rayonnement électromagnétique est comprise dans la gamme allant de 200 à 800 nm.

15. L'adhésif selon la Revendication 13, dans lequel ladite étape de chauffage (b) est réalisée à une température comprise dans la gamme allant de 50 °C à 200 °C.

16. Un article comprenant une adhésion métal-métal, dans lequel l'adhésif de la Revendication 13 est utilisé pour l'adhésion métal-métal.

17. L'article selon la Revendication 16, dans lequel au moins un desdits métaux est de l'acier.

18. Un article comprenant une adhésion plastique-métal, dans lequel l'adhésif de la Revendication 13 est utilisé pour l'adhésion plastique-métal.

19. L'article selon la Revendication 18, dans lequel ledit métal est de l'acier.

20. Un article comprenant une adhésion plastique-plastique, dans lequel l'adhésif de la Revendication 13 est utilisé pour l'adhésion plastique-plastique.

21. La composition selon la Revendication 1, comprenant en outre un agent d'oxydation.

**22.** La composition selon la Revendication 22, dans laquelle ledit agent d'oxydation est un peroxycétal.

**23.** La composition selon la Revendication 1, comprenant en outre un agent de pontage.